# EUROPEAN PATENT APPLICATION

(11) **EP 2 532 230 A1**
(43) Date of publication of application: **12.12.2012**
(21) Application number: 11739322.3
(22) Date of filing: 04.02.2011
(51) Int. Cl.: A01M 29/06, H02G 7/00

(54) **MOBILE, PIVOTING, ROTARY, MOVABLE, AUDIBLE WARNING DEVICES FOR TALL STRUCTURES TO ENSURE HUMAN, AIRCRAFT AND AVIFAUNA SAFETY**

(30) Priority: 05.02.2010 CL 1042010
(71) Applicant: Madrid Rodríguez, Juan Ernesto, Lo Barnechea, Santiago (CL)
(72) Inventor: MAUREIRA MENGHINI, Ida Bernarda, Lo Barnechea Santiago (CL)
(74) Representative: Carpintero Lopez, Francisco
(86) International application number: PCT/CL2011/000012
(87) International publication number: WO 2011/094889

(57) **Abstract**

The invention relates to an attempt to address the deficient signaling that protects human and birds from collinding with tall constructions whatever their type could be, i.e.: warning devices including pivoting and rotary spherical, tubular or helicoidal elements having independent, freely pivoting mobiles, which are movable, with high visibility and audible.

In the case of the spherical version, its outer structure, comprised by two pipe rings mounted perpendicularly among them of inert corrosion-resistant non metallic material and with high dielectric value such as PVC or other similar with ultraviolet ray protection and drillings, which when wind blows emits a sound, rotates on its shaft which is formed by a bar, antenna, insulator tower or cable on which it will be installed.

On its transverse shafts comprised by spokes of the same material than the outer rings, but with massive conformation, there are pivoting elements with blade or propeller shape of plain faces and warning type color surfaces or others, with photoluminescent and reflecting quality, being these four or eight depending on the model used and with drillings for their independent sound.

In the case of the tubular and the helicoidal model, the same pivoting technique, rotation, displacement, and free and independent sound of its components is used with the proper variables of their forms.

## Description

In view of the problem implied by high electrocution and collision of birds with electrical installations and other tall structures, caused by lack of proper signals, or considering that such existing are technically insufficient for having a single function, the rotary eolian, movable, and audible deterrent device for birds and animals of this invention, having pivoting catadioptric elements, provides an integral solution to the problem because of its high visual impact that prevents nesting and bird perching, as well as driving birds away or alerting them by emitting whistling sounds to night flight birds, and moving in the direction of overhead power lines or any other similar structure, while being environmentally-friendly.

High mortality of birds caused by collisions with electricity transmission lines, as disclosed by several studies both in Europe (particularly in Spain) and in the U.S.A., generates high interest in the industry for developing new solutions to this problem.

Documents published in ES 106081; US 2004/0255837 Al; and US 2009/16689 A disclose a device that is connected by one of its ends to the cable and is hanging from it, driving thus away the focus of the element to be protected. When the wind blows, a part of it turns in one of its ends, leaving the other end without support, causing two opposite effects to its purpose: on one hand, if wind intensity is a little higher, the element changes position remaining horizontal to the cable, objectively losing its visibility, and, on the other hand, when the wind blows with higher intensity, and depending on the length of the element, when leaning in the wind direction on its connected support, its turn capacity is decreased or annulled by the axial movement. In addition, it has the limitation of not providing protection to night flight species, because no sound is emitted.

In the current state of the art, each and every one of elements are stationary, even if they are not immobile, facilitating perching of birds, which feces corrode and damage structures, covering signals and allowing nesting at their structures.

The present invention provides a solution to these problems, because with its "eolian rotor assembly" (as detailed herein below) installed on the cable or element to be protected, using it as its movement shaft, all the structure turns with the wind and covers it without losing visibility or mobility. In addition, this invention provides the option of moving along the cable through rotational movement, because it has a sleeve attached to the cable in its direction, provided in its outer part with a long pitch trapezoidal thread on which the assembly will move along the required cable span as a nut with inner thread. On the other hand, both the structure and the internal mobile independent turn elements of this invention provide a solution to the night flight species protection problem, because they use the wind to emit whistling sounds.

The term independent turn is referred to the capacity shown by the inner pivoting elements to turn in opposite direction between each other and in relation the main structure rotation, increasing thus the visual focus or drawing the attention for its warning color surfaces or others in the different faces.

Conventional drawings that illustrate the figures of the different invention modalities using the basic technique are provided for better understanding: movement, sound, and free and independent turns of the different parts through the wind, vibration, and/or any other external agent that stimulates it when perching or when contacting the structure.

### Description of main parts:

### 1. Spherical model (sheet 1/5)

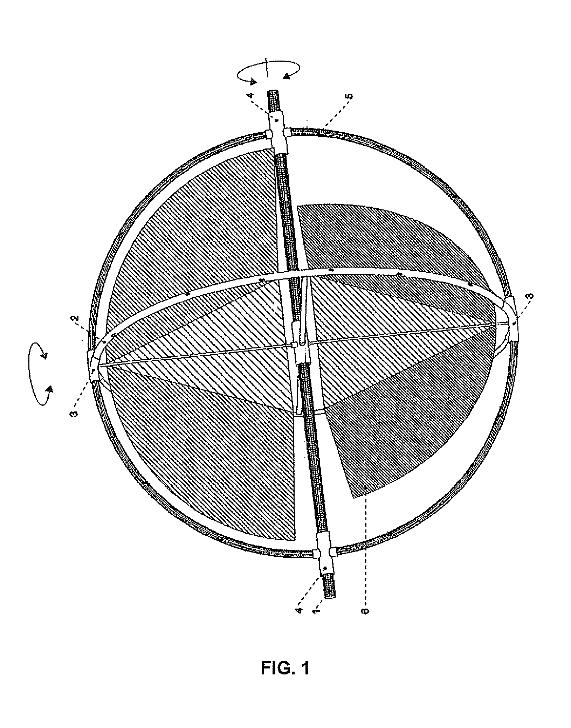

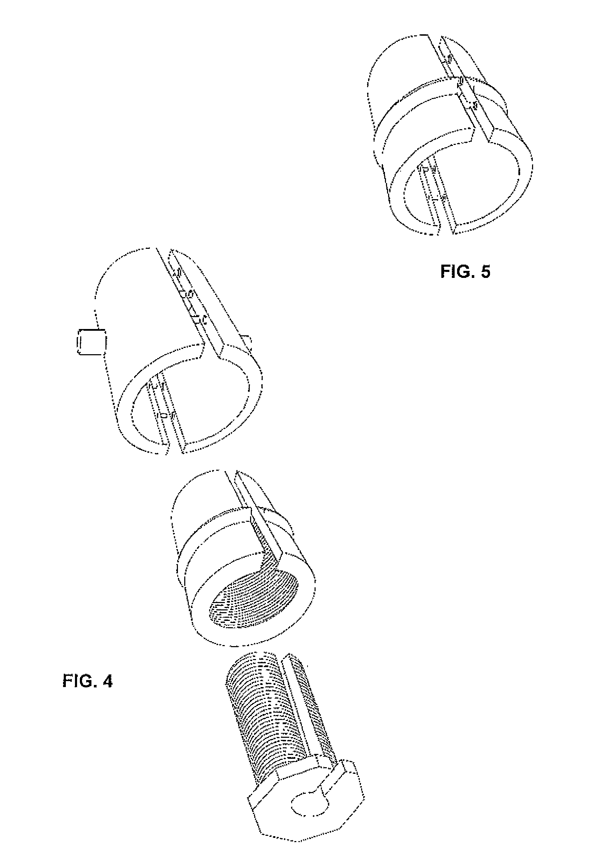

1.1. The shaft (Fig.1; No. 1) has a different nature and corresponds to the structure to be protected, i.e., it could be a cable, a bar, an antenna, or an insulator tower, etc., reason why its diameter is variable and is not a part of this invention.
1.2. Polyvinyl chloride pipe rings or similar (Fig. 1, No. 2) segmented and assembled by cross braces (Fig. 1, No. 3) and by the eolian rotor assemblies in the shaft (Fig.1, No. 4). They are assembled and chemically welded with glue for polyvinyl chloride, wherein the pipe is male and the parts, such as, cross braces (No. 3) and eolian rotor assemblies (No. 4) are female. The polyvinyl chloride pipe rings or similar (No. 2) comprise eight parts of 1/4 circumference each to form two rings of the same size, and perpendicular between each other, giving rise to the main spherical structure.
1.3. Cross braces (No. 3) are made of polyvinyl chloride or similar, female type, with a curvature radius depending on the sphere diameter.
1.4. Eolian rotor assemblies (No. 4) comprise a unit that can be attached to the shaft under pressure, consisting of a polyvinyl chloride or similar conical thread, long pitch, longitudinally split or slotted bolt, according to the shaft width or diameter on which it will be mounted (e.g., electric cable); and polyvinyl chloride or similar, conical thread, also slotted, long pitch nut having a cylindrical and smooth body with shoulder, guide pin type at its center (Fig. 4), on which the female part provided in the rotary structure (Fig. 5) will turn. The shoulder is an angular type shoulder. The complementary nut female part has a female receiving coupling of the main spherical structure pipe, i.e., it has an angular slot in its inner face for the measure of the above described male type complementary part angular shoulder, and a joint coupling to the structure pipe in its outer face.

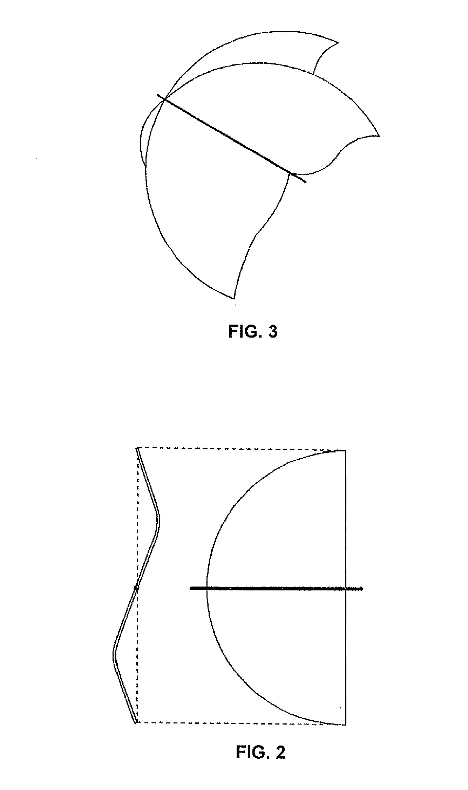

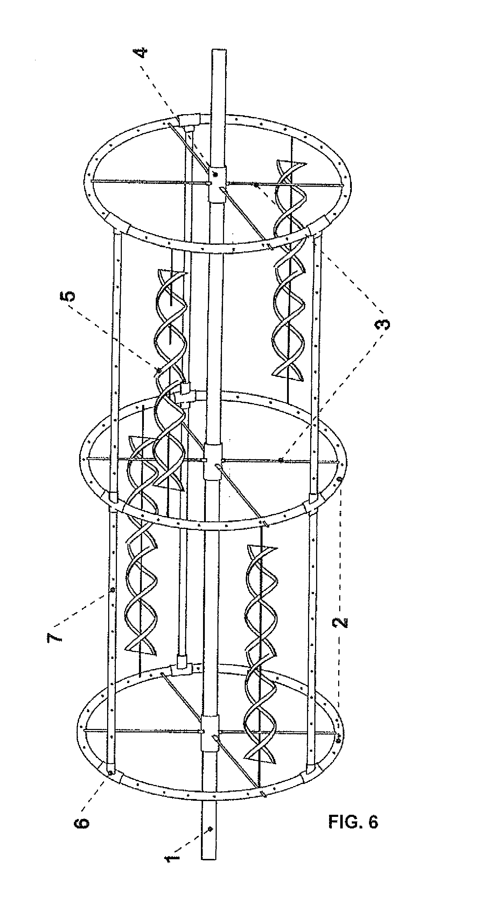

Alternatively, a polyvinyl chloride or similar cylindrical part poured inside, according to the shaft diameter, split in two halves and provided with pressure closing elements in its mass or body, with a guide for the rotary movement in its outer face (Fig. 6), can also be used.
1.5. Perforations (Fig. 1, No. 5) in the pipes are proportional to their diameter, not exceeding one fourth of it, and are arranged so that there are six perforations in each fourth of circumference, wherein there are three in the front face and three in the inner face, arranged perpendicularly and alternately between each other, allowing thus the passage of wind and emitting the whistling sound. They will be arranged in counter-directions every other to receive the wind that blows spontaneously according to the environmental conditions and in the opposite direction of such making blades turn.
1.6. Pivoting bodies (Fig. 1, No. 6) comprise:
   a) One polyvinyl chloride or similar solid and rigid shaft that also plays the structural role of spoke.
   b) Half circumference structured or ribbed membrane-type polyvinyl chloride or similar propeller, separated in two in order to provide the warning-type colors or others in both sides, creating thus a single part with its pivoting shaft. Its aerodynamic torsion depends on its size in order to optimize the use of wind. (Fig. 2).
   c) structured or ribbed membrane-type polyvinyl chloride propeller that forms four warning-type colored semi-circular dihedrons or others, with the typical aerodynamic torsion that provides higher visual capacity, and that uses the wind to generate sound, just like the previous model (6.b), fixed to its pivoting shaft. (Fig.3)
   d) Three pivoting bodies, according to the previous model (6.c), arranged at 120° between each other.
   e) Two-blade propellers, according to the previous model (6.b), with perforations in the surfaces of their faces, arranged in counter-directions, allowing the passage of wind so that it can independently emit its own sound. These perforations will have a shoulder that will form an acoustic spoon provided with a vibrating tag at its center, which direction will vary in order to obtain different sounds.
1.7 For the movable option, the entire assembly is mounted on a long pitch male polyvinyl chloride or similar sleeve provided with outer thread, pressure-attached to the shaft, wherein the shaft is a cable or otherwise, and is also detachable, using the inner face of the eolian rotor assemblies (1.4) as nuts, allowing the whole assembly to move.

### 2. Tubular Model. (sheet 4/5)

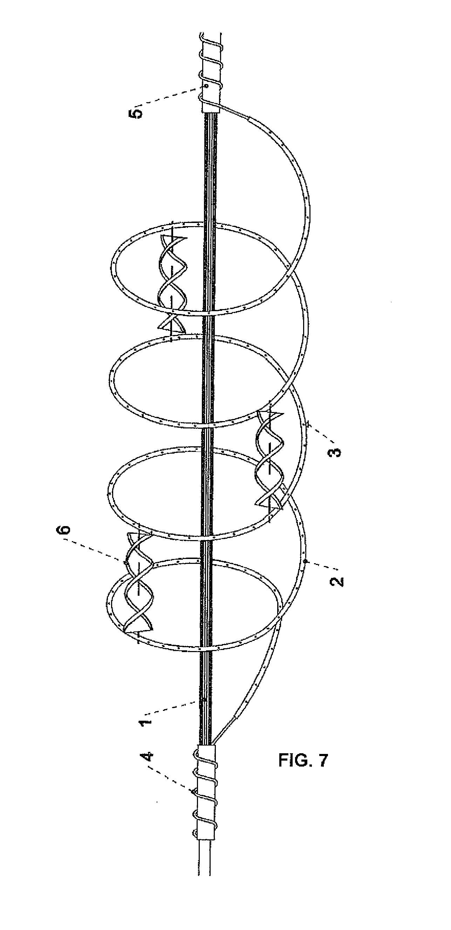

2.1. The shaft (Fig.7, No. 1) has a different nature and corresponds to the structure to be protected, i.e., it could be a cable, a bar, an antenna, or an isolator tower, etc., reason why its diameter varies and it not a part of this invention.
2.2. It comprises a number of rings (Fig. 7, No. 2) according to the length required by the shaft to be covered. These rings are arranged perpendicularly to the shaft and are attached to the shaft by spokes (Fig. 7, No. 3) and eolian rotor assemblies (Fig. 7, No. 4); they are connected to each other by propellers or tapes with warning colors or others that turn independently, as an worm thread (Fig. 7, No. 5), or catadioptric dihedrons. Each of the parts, as in the previous (spherical) model, is made of polyvinyl chloride or similar and is provided with ultraviolet ray protection.
2.3. The eolian rotor assembly, through which rings are attached to the shaft, has the same assembly mechanism as the spherical model (1.2), with the difference that it provides three spokes connected to the ring and arranged in 120° degrees.
2.4 The part used to connect the rings is made up by a 900 Tee (Fig. 7, No. 6) with its straight perpendicular starting point, and with the same radius of the ring diameter in the opposite direction. Such Tee connection solution is provided for the ends. The length of the pipe used to separate the rings (Fig. 7, No. 7) will prevent bending and will be self-supporting, working in connection with the other two that are separated from each other at 120°, and attached to the next one in their own Tees, so that a cage is formed that can be enlarged as many times as necessary, adding this segment on a modular basis.
2.5 Both ring pipes and ring separator pipes are perforated as described in the previous model (1.5).
2.6 The mechanism and parts as described in the model 1.7. will be provided in order to obtain the movable option
2.7 Extensions of connections between intermediate rings will be obtained through cross braces in their straight longitudinal direction and in perpendicular direction with the curvature radius corresponding to the pertinent ring diameter.

### 3. Helicoidal model (lam 5/5)

3.1 The shaft idem (1.1) (2.1) (Fig.8, No.1).
3.2 It is made up of a polyvinyl chloride pipe or similar with ultraviolet ray protection. (Fig. 8, No. 2).
3.3 This pipe is drilled in an alternate way and perpendicular to its shafts in 90°, leaving not drilled spaces five times of their diameter. Drillings (Fig. 8, No. 3) will be executed after the conformation of the helicoidal structure.
3.4 The pipe forms a helicoidal structure of no more than four full rounds in relation to its shaft.
3.5 The helicoidal structure connects on its ends to a round and massive bar, polyvinyl chloride or similar chemically welded with polyvinyl chloride glue penetrating the bar inside the pipe at least two times its diameter (Fig. 8, No. 4).
3.6 Polyvinyl chloride or similar round and massive ends will constitute a pressure gimped yarn on the typical piece (Fig. 8, No. 5).
3.7 Among the inner faces of turns of the helicoidal structure two pivoting shafts per loop are placed, carriers of polyvinyl chloride propellers or similar, structured or nerved, with the shape of an endless tape of independent turn (Fig. 8. No. 6).
3.8 Pivoting shafts pivot in a bushing which houses in the pipe, crossing it on each end. The bushing is made up of polyvinyl, teflon or similar.
3.9 The movable option is identical to that described in 1.7.

In relation to disadvantages that could be mentioned on this invention, we could say that the performance of deterrent devices for birds and animals in hurricane zones, extreme winds or tornados is unknown. On the other hand, all components, although they are prepared to resist outdoor conditions, could not be used in environments with temperatures higher than 60° centigrades.

## Claims

1. Rotary eolian, movable, and audible deterrent device for birds and animals, with pivoting catadioptric elements, against high electrocution and collision of birds in tall structures, **CHARACTERIZED IN THAT** its main piece, so called "eolian rotor assembly", a set of two cylindrical pieces, with a length of one and a half times its diameter, is comprised by one pvc bolt or similar of conical thread, longitudinally split or slotted according to the shaft width or diameter, on which a pvc nut or similar equally slotted of conical thread will be mounted, which cylindrical and smooth body has an angular projection on its transverse center, forming the mass with movable ring, of one quarter of its height diameter as guide; the threading progress is equivalent to one and a half turn of the nut piece on the bolt, so that the slot of one with respect to the other - at the torque point - is at 180 degrees; and one cylindrical structure with female assembly on its transverse inner center and divided in two halves in its longitudinal direction with pressure-closing of one against the other on its male-female ends, which on the outer center also have a female receiving coupling of the pipe staying fixed to the structure of the device, where the thickness of the mass wall with movable guide ring is of one eighth of the diameter.

2. Deterrent device for birds and animals according to claim No. 1, **CHARACTERIZED IN THAT** the eolian rotor assemblies allow the device to rotate around the installation to be protected, which constitutes its shaft.

3. Deterrent devices for birds and animals according to claim No. 1, **CHARACTERIZED IN THAT** the alternative of the piece of the eolian rotor assembly is constituted by one pvc piece or similar, poured inside, according to the shaft diameter, split and provided with pressure closing elements in its mass or body, carrying the guide in its outer face according to the above described dimensions for the pivoting movement of the device structure.

4. Deterrent device according to claim No. 1, **CHARACTERIZED IN THAT** the outer rings conforming the structure, whether it is spherical, tubular or helicoidal, have drillings in proportion to its diameter of no more than 1/4 thereof and are arranged in such a manner that there are six drillings in each quarter of circumference, where there are three on its frontal face and three on its internal face, and where they are placed in a perpendicular and alternate way.

5. Deterrent device according to claim No. 1, **CHARACTERIZED IN THAT** it has the option of moving along the shaft to be protected, comprised by a threaded, long pitch pvc liner or similar, housed on the shaft, which upon terminating the travel in one direction encounters the structure and returns driven by wind.

6. Deterrent device of a spherical model according to claim No. 1, **CHARACTERIZED IN THAT** it is comprised by rings of pvc pipes or similar, segmented and assembled by cross braces and the eolian rotor assemblies in the shaft and which additionally, contain pivoting bodies.

7. Deterrent device of spherical model according to claim No. 6, **CHARACTERIZED IN THAT** the rings of the polyvinyl chloride pipes or similar are comprised by eight parts of 3/4 circumference each, assembled in a perpendicular manner among them.

8. Deterrent device of spherical model according to claim No. 6, **CHARACTERIZED IN THAT** the joint of the rings of the pipes consists of cross braces, which are made up of pvc or similar, female type, with a curvature radius depending on the sphere diameter.

9. Deterrent device of spherical model according to claim No. 6, **CHARACTERIZED IN THAT** it is also comprised by its outer structure, as described in claim No. 6, by the pivoting bodies with independent movement among them and in relation to the structure of the device, which has a pvc shaft or similar massive and rigid, which also plays the structural role of spoke and one pvc propeller or similar, structured or nerved membrane type of a half circumference separated in two segments, forming only one piece with its pivoting shaft.

10. Deterrent device of spherical model according to claim No. 9, **CHARACTERIZED IN THAT** this model of pivoting body has a pvc shaft or similar, massive and rigid, which also plays the structural role of spoke and structured or ribbed membrane-type polyvinyl chloride propeller that forms four semi-circular dihedrons with the typical aerodynamic torsion with its pivoting shaft.

11. Deterrent device of spherical model according to claim No. 10, **CHARACTERIZED IN THAT** this model of pivoting bodies has three pvc shafts or similar, massive and rigid, that also plays the structural role of spoke and three pivoting bodies of independent movement, according to claim No. 9, arranged at 120° among them, in the pipe perpendicular to the device shaft.

12. Deterrent device of spherical model according to claim No. 9, **CHARACTERIZED IN THAT** surfaces of faces of propeller blades have warning-type colors or others and reflecting and/or photoluminescent end.

13. Deterrent device of spherical model according to claim No. 9, **CHARACTERIZED IN THAT** propeller faces are optionally drilled with an acoustic spoon type deformation, which in its center houses a tag, or vibrating membrane and they are distributed on the surface of the propeller blades.

14. Deterrent device of tubular model according to claim No. 1, **CHARACTERIZED IN THAT** it is comprised by the number of rings of pvc pipes or similar according to the length required by the shaft space to be covered, and are arranged perpendicular to the shaft and joint to the eolian rotor assembly by three spokes in 120° among them; rings are connected among them by a 90° tee with a straight perpendicular starting point and with the same curvature radius of the ring diameter in its opposite direction; or through a cross brace in its straight longitudinal direction and in its perpendicular direction with the curvature radius of the ring diameter, depending on whether they are terminals or intermediate rings respectively; on the other hand, the separator pipe among rings will have a length of no more than three times the outer diameter of rings in order to avoid bending, jointly working with the other two that are separated among them at 120°; and by propellers or tapes with warning type colors or others and with independent turn with the shape of an worm thread.

15. Deterrent device de helicoidal model according to claim No. 1, **CHARACTERIZED IN THAT** the pipe forms an helicoidal structure of no more than four full turns in relation to its shaft and is connected to its ends with a round and massive bar, of pvc or similar, penetrating the bar inside the pipe at least two times its diameter; and where the ends of the pvc bar or similar consist of a pressure gimped yarn on the eolian rotor assembly.

16. Deterrent device of helicoidal model according to claim No. 15, **CHARACTERIZED IN THAT** among the inner faces of the loops of the helicoidal structure there are two pivoting shafts per each of them, carries of pvc bands or similar, structured or nerved with the shape of tape, with warning-type colors or others and with independent turn, and which rotate in a bushing housed in the pipe crossing it on each end.
